# FASCICULE DE BREVET EUROPEEN

(11) **EP 2 729 311 B1**
(45) Date de publication et mention de la délivrance du brevet: **14.09.2016**
(21) Numéro de dépôt: 12738561.5
(22) Date de dépôt: 04.07.2012
(51) Int. Cl.: B42D 1/08, B42F 11/04, B42F 5/04, B42F 7/06

(54) **PRESENTOIR DE DOCUMENTS OU D'INFORMATIONS CONTENU(E)S DANS DES POCHES TRANSPARENTES OU AUTRES ELEMENTS ANALOGUES**
ANZEIGE FÜR DOKUMENTE ODER INFORMATIONEN IN TRANSPARENTEN BEUTELN ODER ÄHNLICHEN ELEMENTEN
DISPLAY FOR DOCUMENTS OR INFORMATION CONTAINED IN TRANSPARENT POUCHES OR OTHER SIMILAR ELEMENTS

(30) Priorité: 05.07.2011 FR 1156057
(43) Date de publication de la demande: 14.05.2014
(73) Titulaire: Tarifold (Societe par Actions Simplifiee), 67118 Geispolsheim (FR)
(72) Inventeur: BARUTEAUD, Benjamin, F-67000 Strasbourg (FR); BARTHEL, Jean-Marc, F-67100 Strasbourg (FR)
(74) Mandataire: Nuss, Laurent
(86) Numéro de dépôt international: PCT/FR2012/051560
(87) Numéro de publication internationale: WO 2013/004971

(56) Documents cités:
- FR-A- 1 331 254
- FR-A- 1 429 271
- FR-A3- 2 592 837
- GB-A- 617 186

## Description

La présente invention concerne le domaine des présentoirs de documents et a pour objet un présentoir de documents ou d'informations contenu(e)s dans des poches transparentes ou autres éléments analogues.

On connaît déjà des présentoirs de documents équipés de poches transparentes contenant lesdits documents et montées chacune pivotante. Ils comprennent généralement au moins un ensemble composé d'une rangée de poches et d'un support comprenant un système de réception de la rangée de poches sur le support. Chaque poche présente un côté de fixation et de pivotement pourvu d'au moins un élément de pivotement et le système de réception est agencé pour recevoir et retenir, de façon amovible, le ou les éléments de pivotement de chaque poche sur le support, ce de sorte à permettre la fixation amovible et le pivotement, à la manière des pages d'un livre, de chaque poche sur le support.

De telles poches sont généralement constituées chacune par une enveloppe transparente, de forme globalement rectangulaire, rigidifiée sur son pourtour et comportant, dans le prolongement axial ou au niveau de chaque extrémité du côté de fixation et de pivotement, formant l'un des côtés de la poche correspondante, deux pivots formant ensemble l'axe de pivotement de la poche correspondante fixée sur le support.

Parmi les poches utilisées dans ces présentoirs on connaît, par exemple, des poches avec un seul contenant destiné à recevoir un document et des poches avec plusieurs contenant fixés sur l'une des faces externes de la poche et généralement destinés à recevoir des disquettes, des Cd ou autres supports d'information informatiques ou multimédia.

D'autre part, le support de ces présentoirs est généralement du type pupitre ou mural et est constitué par une simple plaque métallique munie d'un pied pour son soutien sur une surface de présentation ou fixée sur un mur, tandis que les bords supérieur et inférieur de ladite plaque sont chacun pliés sensiblement en angle droit et comportent chacun dans la partie pliée une rangée de trous destinés chacun à recevoir l'un des pivots d'une poche.

D'autres présentoirs connus sont constitués par un support en matière plastique comportant deux pièces d'extrémité qui sont adaptées pour recevoir des pivots solidaires du côté de fixation et de pivotement de chaque poche.

Toutefois, le système de liaison mâle/femelle, du type charnière, utilisé dans ces présentoirs pour fixer et articuler en pivotement les poches présente de nombreux inconvénients.

Tout d'abord, la mise en place d'une poche sur le support à un emplacement de la rangée déjà occupé par une autre poche nécessite l'enlèvement de ladite poche puis son décalage avec les autres poches suivant ou précédent cette dernière, le long de la rangée, nécessitant l'enlèvement puis la mise en place desdites poches à décaler.

D'autre part, l'enlèvement ou la mise en place d'une poche nécessite un déplacement de son axe de pivotement suivant plusieurs axes, avec inclinaisons, et de trouver le trou correspondant dans le support pour insérer le pivot correspondant.

D'autres dispositifs utilisent d'autres systèmes que les charnières pour pouvoir fixer les poches sur leur support tout en permettant leur pivotement :
Le document FR 1 429 271 A, qui montre un présentoir selon le préamblule de la revendicaion 1, a pour objet un dispositif relieur de feuillets mobiles consistant en une combinaison d'aimants et d'éléments de guidage permettant de maintenir en place par aimantation des feuillets mobiles. Des aimants sont placés au fond d'un auget fixé sur la face interne d'un endos réunissant deux couvertures d'un porte-document et le côté de fixation de chaque feuillet comprend un fil métallique formant une boucle rectangulaire dont un côté de la boucle est emprisonné dans un onglet du feuillet et l'autre est apparent pour adhérer aux aimants. Dans une variante le fil présente une surface plane et est emprisoné dans le feuillet qui comporte, dans son côté de fixation, des échancrures pratiquées en retrait de ses extrémités.

Le document GB 617 186 A décrit un livre, dont la face interne du dos est surmontée de bandes métalliques qui sont magnétisées sur leur face externe le long de leur côté transversaux de manière à permettre la fixation magnétique des feuilles qui comportent à cet effet des attaches en forme de pinces de « couture » situées en retrait des extrémités dudit côté et qui sont destinées à être mises posées sur lesdites bandes.

Le document FR 2 592 837 A3 décrit une structure d'album de classement ou collection comprenant deux plats frontal et arrière réunis par un dos et un aimant permanent réalisé au moyen d'une barre magnétique recouvrant la surface entière de la face interne du dos et sur lequel peuvent venir en contact des dosserets en matériau ferromagnétique appliqués le long du bord des feuillets. Chaque dosseret comprend un groupe de feuillets maintenus et fixés dans ce dernier à l'aide de rivets. Chaque dosseret présente, en section transversale, une conformation en U et s'étend longitudinalement suivant tout la longueur de l'aimant.

Toutefois ces dispositifs, qui utilisent des systèmes d'attaches magnétiques complexes et coûteux à réaliser, nécessitent des opérations de fabrication coûteuse et ne permettent pas au présentoir d'obtenir une stabilité efficace.

La présente invention a pour but de pallier ces inconvénients en proposant un présentoir ou d'informations contenu(e)s dans des poches transparentes ou autres éléments analogues, permettant une mise en place et un enlèvement simple et rapide desdites poches, ainsi qu'une mise en place d'une poche à n'importe quel emplacement occupé par une autre poche de la rangée, en extrémité ou entre deux poches successives, ce avec un déplacement naturel des autres poches de la rangée et tout en permettant un coût de fabrication inférieur à celui des systèmes actuels, ainsi qu'en conférant une stabilité maximum au présentoir.

A cet effet, la présente invention a pour objet un présentoir selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective d'un présentoir, selon la présente invention, comprenant un ensemble dans un mode de réalisation préférentiel, avec le système de réception constitué par un site de fixation magnétique et un site de fixation mécanique,
- la figure 2 montre le présentoir représenté sur la figure 1, dans la phase de fixation de la poche sur le support,
- la figure 3 montre une vue en perspective et en éclatée du support et du site de fixation magnétique représentés sur la figure 1,
- la figure 4 montre le support et le site de fixation magnétique représentés sur la figure 3 à l'état assemblé de leurs éléments constitutifs.

Les figures montrent un présentoir, selon la présente invention, de documents ou d'informations contenu(e)s dans des poches 2 transparentes ou autres éléments analogues, comprenant au moins un ensemble composé d'une rangée de poches 2 et d'un support 1 comprenant un système de réception 3 et 3' de la rangée de poches 2 sur le support, chaque poche 2 présentant un côté de fixation et de pivotement 4 pourvu d'au moins un élément de pivotement 5, le système de réception 3 et 3' étant agencé pour recevoir et retenir, de façon amovible, le ou les éléments de pivotement 5 de chaque poche 2 sur le support 1, ce de sorte à permettre la fixation amovible et le pivotement, à la manière des pages d'un livre, de chaque poche 2 sur le support 1.

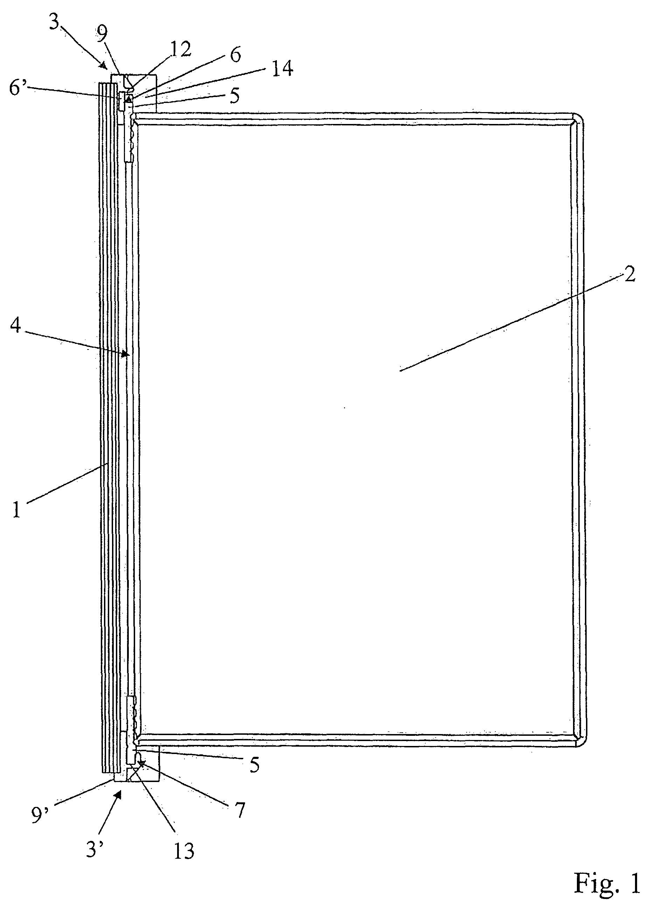

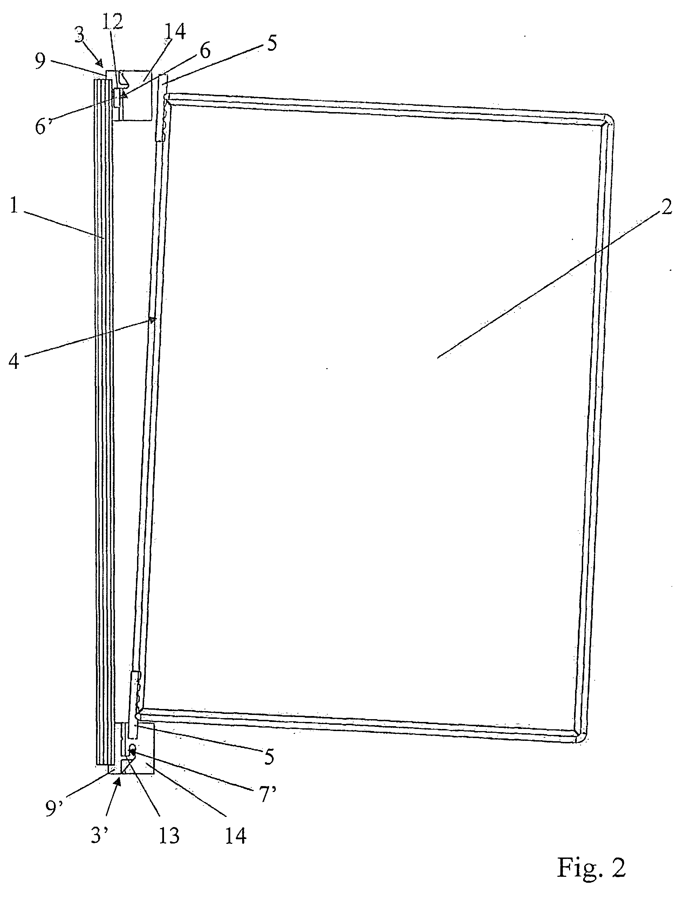

Conformément à la présente invention, pour chaque ensemble, chaque poche 2 est munie de deux éléments de pivotement 5 consistant chacun en un pivot, de forme globalement cylindrique ou polygonal, s'étendant sensiblement parallèlement au côté de fixation et de pivotement 4 correspondant et sensiblement au niveau et/ou delà de l'une des extrémités du côté de fixation et de pivotement 4 correspondant. Le système de réception est constitué par un site de fixation magnétique 3 apte à recevoir et à retenir par attraction magnétique l'un des deux pivots 5, au moins en partie métallique ou magnétique, de chaque poche 2 et par un site de fixation mécanique 3' apte à recevoir et à retenir mécaniquement l'autre pivot 5 de chaque poche 2 (figures 1 et 2).

Toujours conformément à la présente invention, le système de réception 3 et 3' est apte à autoriser, à l'état de fixation, un déplacement transversal du côté de fixation et de pivotement 4 de chaque poche 2 sur le support 1.

On entendra par déplacement transversal du côté de fixation et de pivotement 4 de chaque poche 2, un déplacement de ce dernier sensiblement parallèle à l'axe longitudinal de la rangée de poches correspondante.

Un tel déplacement transversal rend alors possible la mise en place d'une poche sur le support 1, à un emplacement de la rangée déjà occupé par une autre poche, en décalant les poches suivant ou précédent ledit emplacement, ce simplement par glissement transversal de ces dernières et plus particulièrement de leur(s) éléments de pivotement dans les sites de fixation correspondants le long de la rangée.

Dans une forme de réalisation préférentielle des moyens de fixation magnétique 6 du site de fixation magnétique 3, ceux-ci peuvent consister en une surface de fixation magnétique et de déplacement latéral, métallique ou magnétique, apte à retenir, par attraction magnétique le ou l'un des élément de pivotement 5 contre la surface de fixation magnétique et de déplacement latéral 6, tout en permettant le glissement latéral de l'élément de pivotement concerné sur la surface de fixation magnétique et de déplacement latéral 6 de sorte à autoriser, à l'état de fixation, le déplacement transversal du côté de fixation et de pivotement 4 de chaque poche 2.

La surface de fixation magnétique et de déplacement latéral 6 du site de fixation magnétique 3 peut s'étendre de façon continue ou discontinue et peut présenter une forme, par exemple, de préférence plane ou rainurée, alvéolée, courbe ou arrondie ou une combinaison de ces formes.

Ainsi, dans le cas où le système de réception comprend une pluralité de surfaces de fixation magnétique et de déplacement latéral 6 de forme plane, lesdites surfaces planes peuvent s'étendre sensiblement dans un même plan.

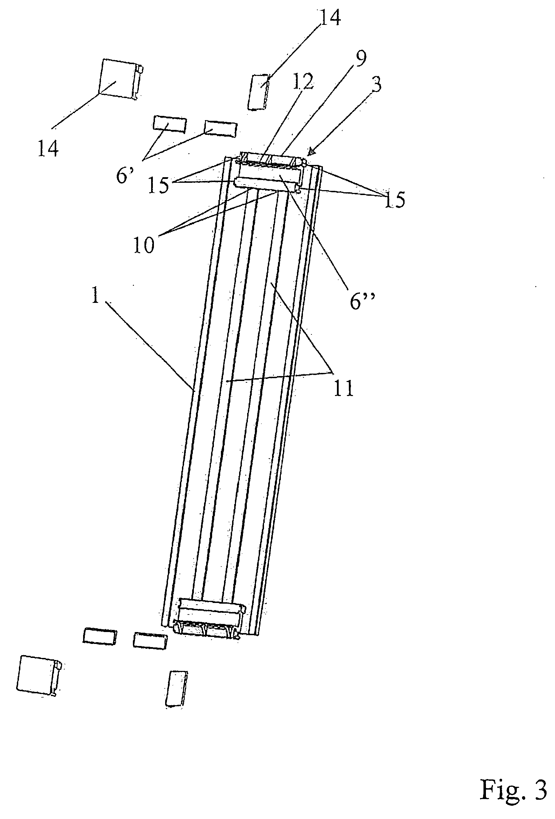

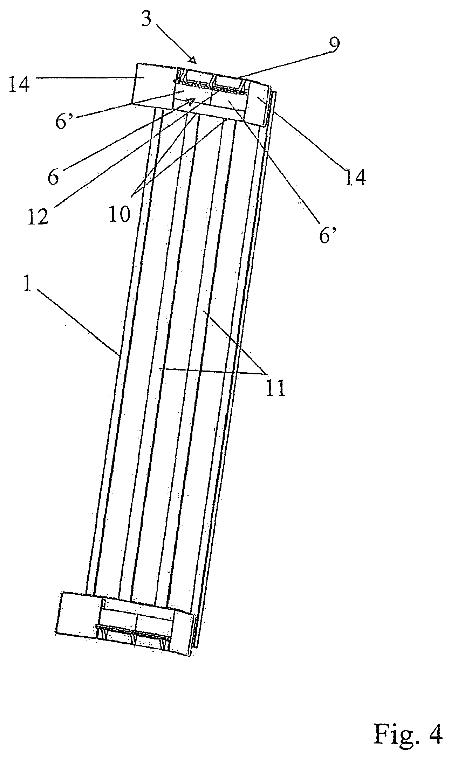

De préférence, la surface de fixation magnétique et de déplacement latéral 6 du site de fixation magnétique 3 peut être réalisée à partir d'un aimant ou d'une juxtaposition d'aimants 6' se présentant chacun, par exemple, sous la forme d'une plaquette, dont l'une des grandes faces forme, au moins partiellement, ladite surface 6 (notamment figures 3 et 4).

On notera qu'un tel mode de fixation magnétique des poches 2 sur le support 1 d'un ensemble d'un présentoir selon la présente invention permet de maintenir le côté de fixation et de pivotement 4 de chaque poche 2 selon un axe sensiblement perpendiculaire à l'axe longitudinal de la rangée de poches 2 correspondante et d'empêcher que les côtés de fixation et de pivotement 4, qui sont, en quelques sortes, collés magnétiquement sur le support 1, s'inclinent à l'état de fixation, notamment dans le cas où toutes les poches ne sont pas fixées sur le support 1.

Le cas échéant, dans une forme de réalisation préférentielle des moyens de fixation mécanique du site de fixation mécanique 3', comme on peut le voir sur la figure 1 et sur la figure 2, ceux-ci peuvent consister en une rainure 7 de fixation mécanique s'étendant transversalement, c'est-à-dire sensiblement parallèlement à l'axe longitudinal de la rangée de poches 2 correspondante, et étant apte à recevoir et à retenir mécaniquement, dans la rainure 7, l'un des élément(s) de pivotement 5 de chaque poche 2, tout en permettant le glissement dudit élément de pivotement 5 dans la rainure 7 de sorte à autoriser, à l'état de fixation, le déplacement transversal du côté de fixation et de pivotement 4 de la poche 2 concernée.

On comprendra que dans le cas d'un site de fixation mécanique, l'élément de pivotement apte à être reçu et retenu par ce dernier pourra être réalisé en un matériau rigide quelconque, y compris un matériau métallique ou magnétique, et que ledit élément pourra comporter au moins une extrémité d'engagement, le cas échéant, dans la rainure du site de fixation mécanique 3' concerné.

Le ou chaque pivot 5 est réalisé, le cas échéant, au moins partiellement, à partir d'un matériau métallique ou magnétique en vue de réaliser sa fixation sur le support 1 par attraction magnétique.

Chaque pivot 5 s'étend soit au niveau et/ou au-delà, c'est-à-dire au niveau ou au niveau et au-delà, de l'une des deux extrémités du côté de fixation et de pivotement 4 correspondant comme on peut le voir notamment sur les figures 1, 2, 3, 4 où chaque pivot dépasse axialement de l'extrémité correspondante.

Chaque pivot peut être prévu pour présenter un diamètre supérieur à l'épaisseur des poches 2 et notamment du côté de fixation de ces dernières de sorte à pouvoir se toucher et à former, avec les aimants 6' les recevant, un ensemble cohérent permettant d'améliorer l'efficacité du présentoir (figure 1).

Par ailleurs, le diamètre des pivots 5 métalliques peut être adapté en étant suffisamment grand ou élevé pour permettre une surface d'échange ou de contact plus grande avec les aimants 6' et donc une attraction plus forte, de sorte à améliorer encore l'efficacité du présentoir. D'autre part, les aimants 6' peuvent être adaptés, par exemple en épaisseur, pour optimiser leur force d'attraction des pivots 5 métalliques.

La position des pivots 5 aux deux extrémités de chaque poche 2, c'est-à-dire un pivot 5 par extrémité, confère au présentoir une stabilité maximum.

Ainsi, l'utilisation de tels pivots 5 permet une ouverture totale des poches, une utilisation de toute la surface de lecture et une réduction de l'encombrement de l'ensemble.

De préférence, le site de fixation magnétique 3, respectivement mécanique 3', peut consister en une pièce monobloc 9, respectivement 9', de préférence en matière plastique, pouvant comporter deux faces opposées, dont l'une desdites faces opposées peut comporter les moyens de fixation magnétique 6, respectivement des moyens de fixation mécanique 7, et l'autre face opposée peut comporter des moyens de liaison 10 permettant sa fixation, de préférence amovible, sur le support 1.

Plus précisément, on peut voir sur la figure 3 que chaque pièce monobloc 9 d'un site de fixation magnétique 3 peut comporter un logement 6" adapté pour recevoir un ou plusieurs aimants 6' aptes à former la surface de fixation magnétique et de déplacement latéral 6 correspondante.

Par ailleurs, les moyens de liaison 10 de la ou de chaque pièce monobloc 9, respectivement 9', peuvent consister en des moyens d'emboîtement élastique mâles ou femelles (notamment figure 3), de préférence réversible, tels que par exemple au moins une rainure, par exemple de section transversale en C, apte(s) à coopérer avec des moyens d'emboîtement élastique complémentaires 11 mâles ou femelles, tels que par exemple au moins une nervure, par exemple de section transversale en T, solidaire(s) du support 1.

D'autre part, la présente invention peut prévoir qu'au moins un site de fixation magnétique 3, le cas échéant le site de fixation mécanique 3', comporte une butée axiale 12, respectivement 13, permettant de bloquer ou de limiter la translation axiale du côté de fixation et de pivotement 4 de chaque poche 2, à l'état de fixation sur le support 1.

Dans une forme de réalisation préférentielle de la butée axiale 12 d'un site de fixation magnétique 3, celle-ci peut consister en une face d'appui ou de butée, par exemple la face longitudinale d'une barre ou d'une tablette, s'étendant transversalement (figures) et, le cas échéant, dans une forme préférentielle de la butée axiale 13 du site de fixation mécanique 3', celle-ci peut être constituée par le fond de la rainure 7 (figure 1 et figure 2).

Plus particulièrement, la présente invention peut prévoir, préférentiellement, une butée axiale 12 ou 13 dans la partie basse du système de réception 3 et 3' de sorte à empêcher le glissement de chaque poche 2 vers le bas, plus particulièrement par gravité.

Plus précisément, on peut voir sur la figure 7 que la ou chaque surface de fixation magnétique et de déplacement latéral 6 peut présenter une forme rectangulaire comportant deux grands côtés sensiblement parallèles à l'axe longitudinal de la rangée de poches 2 correspondante et que la ou l'une des barre(s) ou tablette(s), comportant la face d'appui 12, du site de fixation magnétique 3 peut s'étendre le long de l'un des grands côtés de la surface de fixation magnétique et de déplacement latéral 6 correspondante, ladite face d'appui 12 s'étendant alors dans un plan sensiblement perpendiculaire à la surface de fixation magnétique et de déplacement latéral 6 correspondante.

La présente invention peut prévoir des butées latérales 14 fixées, préférentiellement de façon amovible, sur le support 1 et s'étendant latéralement de part et d'autre du site de fixation magnétique 3, le cas échéant mécanique 3', ce de sorte à permettre le maintien latéral des poches 2 fixées sur le support 1 dans un état ouvert à la manière d'un livre ouvert (figure 1). De telles butées latérales 14, par exemple en forme de plaquette ou d'oreille, peuvent être fixées de façon amovible sur la ou des pièces monobloc 9, respectivement 9', concernée(s), par exemple sur les faces latérales de ces dernières et peuvent comprendre à cet effet, par exemple sur l'une de leurs faces latérales, des éléments d'emboîtement élastique 14' mâles ou femelles aptes à coopérer avec des éléments d'emboîtement élastique complémentaires 15 pratiqués dans les faces latérales desdites pièces monoblocs (figure 7).

Bien entendu, l'invention n'est pas limitée au mode de réalisation décrit et représenté aux dessins annexés. Des modifications restent possibles, notamment du point de vue de la constitution des divers éléments, sans sortir pour autant du domaine de protection des revendications.

## Revendications

1. Présentoir de documents ou d'informations contenu(e)s dans des poches (2) transparentes ou autres éléments analogues, comprenant au moins un ensemble composé d'une rangée de poches (2) et d'un support (1) comprenant un système de réception (3, 3') de la rangée de poches (2) sur le support (1), chaque poche (2) présentant un côté de fixation et de pivotement (4) pourvu de deux éléments de pivotement (5), le système de réception (3, 3') étant agencé pour recevoir et retenir, de façon amovible, le ou les éléments de pivotement (5) de chaque poche (2) sur le support (1), ce de sorte à permettre la fixation amovible et le pivotement, à la manière des pages d'un livre, de chaque poche (2) sur le support (1), dans lequel présentoir, pour chaque ensemble, chaque poche (2) est munie de deux éléments de pivotement (5) consistant chacun en un pivot, de forme globalement cylindrique ou polygonal, s'étendant sensiblement parallèlement au côté de fixation et de pivotement (4) correspondant et sensiblement au niveau et/ou au-delà, de l'une des extrémités du côté de fixation et de pivotement (4) correspondant et ledit système de réception est apte à autoriser, à l'état de fixation, un déplacement transversal du côté de fixation et de pivotement (4) de chaque poche (2) sur le support (1), présentoir **caractérisé en ce que** le système de réception (3, 3') est constitué par un site de fixation magnétique (3) apte à recevoir et à retenir par attraction magnétique, à lui seul, l'un des deux pivots (5), au moins en partie métallique ou magnétique, de chaque poche (2) et par un site de fixation mécanique (3') apte à recevoir et à retenir mécaniquement à lui seul l'autre pivot (5) de chaque poche (2).

2. Présentoir, selon la revendication 1, **caractérisé en ce que** les moyens de fixation magnétique du site de fixation magnétique (3) consistent en une surface de fixation magnétique et de déplacement latéral (6), métallique ou magnétique, apte à retenir, par attraction magnétique le ou l'un des élément de pivotement (5) contre ladite surface, tout en permettant le glissement latéral de l'élément de pivotement (5) concerné sur ladite surface de sorte à autoriser, à l'état de fixation, le déplacement transversal du côté de fixation et de pivotement (4) de la poche (2) concernée.

3. Présentoir, selon la revendication 2, **caractérisé en ce que** la surface de fixation magnétique et de déplacement latéral (6) du site de fixation magnétique (3) est réalisée à partir d'un aimant (6') ou d'une juxtaposition d'aimants (6') se présentant chacun sous la forme d'une plaquette, dont l'une des grandes faces forme, au moins partiellement, ladite surface (6).

4. Présentoir, selon l'une quelconque des revendications 1 à 3, **caractérisé en ce que** les moyens de fixation mécanique du site de fixation mécanique (3') consistent en une rainure (7) de fixation mécanique s'étendant transversalement et étant apte à recevoir et à retenir mécaniquement, dans cette dernière, l'un des élément(s) de pivotement (5) de chaque poche (2), tout en permettant le glissement dudit élément de pivotement (5) dans la rainure (7) de sorte à autoriser, à l'état de fixation, le déplacement transversal du côté de fixation et de pivotement (4) de la poche (2) concernée.

5. Présentoir, selon l'une quelconque des revendications 1 à 4, **caractérisé en ce que** le site de fixation magnétique (3), respectivement mécanique (3'), consiste en une pièce monobloc (9), respectivement (9'), de préférence en matière plastique, comportant deux faces opposées, dont l'une desdites faces opposées comporte les moyens de fixation magnétique (6), respectivement mécanique (7), et l'autre face opposée comporte des moyens de liaison (10) permettant sa fixation, de préférence amovible, sur le support (1).

6. Présentoir, selon la revendication 5, **caractérisé en ce que** les moyens de liaison (10) de la ou de chaque pièce monobloc (9) consistent en des moyens d'emboîtement élastique mâles ou femelles, de préférence réversible, tels que par exemple au moins une rainure, apte(s) à coopérer avec des moyens d'emboîtement élastique complémentaires (11) mâles ou femelles, tels que par exemple au moins une nervure, solidaire(s) du support (1).

7. Présentoir, selon l'une quelconque des revendications 1 à 6, **caractérisé en ce que** le site de fixation magnétique (3), le cas échéant le site de fixation mécanique (3'), comporte une butée axiale (12), respectivement (13), permettant de bloquer ou de limiter la translation axiale du côté de fixation et de pivotement (4) de chaque poche (2), à l'état de fixation sur le support (1).

8. Présentoir, selon la revendication 7, **caractérisé en ce que** la butée axiale (12) du site de fixation magnétique (3') consiste en une face d'appui ou de butée s'étendant transversalement et **en ce que**, le cas échéant, la butée axiale (13) du site de fixation mécanique (3') est constituée par le fond de la rainure (7').

9. Présentoir, selon l'une quelconque des revendications 1 à 8, **caractérisé en ce qu'**il comprend des butées latérales (14) fixées, préférentiellement de façon amovible, sur le support (1) et s'étendant latéralement de part et d'autre du ou d'au moins l'un des site(s) de fixation magnétique (3), respectivement mécanique (3'), ce de sorte à permettre le maintien latéral des poches (2) fixées sur le support (1) dans un état ouvert à la manière d'un livre ouvert.

## Patentansprüche

1. Aufsteller für Dokumente oder Informationen, die in transparenten Taschen (2) oder anderen ähnlichen Elementen enthalten sind, mit mindestens einer Anordnung, die sich aus einer Reihe von Taschen (2) und aus einem Gestell (1) zusammensetzt, welches ein Aufnahmesystem (3, 3') für die Reihe von Taschen (2) an dem Gestell (1) aufweist, wobei jede Tasche (2) eine Befestigungs- und Schwenkseite (4) umfasst, die mit zwei Schwenkelementen (5) versehen ist, wobei das Aufnahmesystem (3, 3') dazu eingerichtet ist, das oder die Schwenkelemente (5) jeder Tasche (2) an dem Gestell (2) in beweglicher Weise aufzunehmen und zu halten, derart, dass die bewegliche Befestigung und das Schwenken jeder Tasche (2) an dem Gestell (1) in der Art der Seiten eines Buches erlaubt wird, wobei an dem Aufsteller für jede Anordnung jede Tasche (2) mit zwei Schwenkelementen (5) ausgestattet ist, die jeweils als ein Drehzapfen von insgesamt zylindrischer oder polygonaler Form ausgebildet sind, welcher sich im Wesentlichen parallel zur entsprechenden Befestigungs- und Schwenkseite (4) und im Wesentlichen im Bereich und/oder über das jeweilige Ende der entsprechenden Befestigungs- und Schwenkseite (4) erstreckt, und wobei das besagte Aufnahmesystem dazu eingerichtet ist, im Befestigungszustand eine transversale Bewegung der Befestigungs- und Schwenkseite (4) jeder Tasche (2) an dem Gestell (1) zuzulassen,
wobei der Aufsteller **dadurch gekennzeichnet ist, dass**
das Aufnahmesystem (3, 3') durch eine magnetische Befestigungsstelle (3), die dazu eingerichtet ist, alleine durch magnetische Anziehung einen der beiden zumindest teilweise metallischen oder magnetischen Drehzapfen (5) jeder Tasche (2) aufzunehmen und zu halten, und durch eine mechanische Befestigungsstelle (3') ausgebildet ist, die dazu eingerichtet ist, alleine mechanisch den anderen Drehzapfen (5) jeder Tasche (2) aufzunehmen und zu halten.

2. Aufsteller nach Anspruch 1, **dadurch gekennzeichnet, dass** die magnetischen Befestigungsmittel der magnetischen Befestigungsstelle (3) eine metallische oder magnetische Oberfläche zur magnetischen Befestigung und zur lateralen Verschiebung (6) umfassen, die dazu eingerichtet ist, über magnetische Anziehung das Schwenkelement oder eines der Schwenkelemente (5) an der besagten Oberfläche zu halten, wobei gleichzeitig das seitliche Gleiten des betreffenden Schwenkelements (5) auf der besagten Oberfläche derart ermöglicht wird, dass im Befestigungszustand das transversale Verschieben der Befestigungs- und Schwenkseite (4) der betreffenden Tasche (2) zugelassen wird.

3. Aufsteller nach Anspruch 2, **dadurch gekennzeichnet, dass** die Oberfläche zur magnetischen Befestigung und zur seitlichen Verschiebung (6) der magnetischen Befestigungsstelle (3) ausgehend von einem Magneten (6') oder eine Nebeneinanderstellung von Magneten (6') realisiert ist, die sich jeder in Form eines Plättchens zeigen, von dessen großen Seiten eine zumindest teilweise die besagte Fläche (6) formt.

4. Aufsteller nach einem beliebigen der Ansprüche 1 bis 3, **dadurch gekennzeichnet, dass** die mechanischen Befestigungsmittel der mechanischen Befestigungsstelle (3') eine Nut (7) zur mechanischen Befestigung umfassen, die sich transversal erstreckt und dazu eingerichtet ist, in dieser letzteren das eine Schwenkelement oder eines der Schwenkelemente (5) jeder Tasche (2) mechanisch aufzunehmen und zu halten, wobei gleichzeitig das Gleiten dieses besagten Schwenkelements (5) in der Nut (7) derart erlaubt wird, dass im Befestigungszustand das transversale Verschieben der Befestigungs- und Schwenkseite (4) der betreffenden Tasche (2) zugelassen wird.

5. Aufsteller nach einem beliebigen der Ansprüche 1 bis 4, **dadurch gekennzeichnet, dass** die Stelle zur magnetischen Befestigung (3) bzw. zur mechanischen Befestigung (3') ein einstückiges Bauteil (9) bzw. (9'), vorzugsweise aus Kunststoffmaterial, umfasst, das zwei gegenüberliegende Seiten aufweist, von welchen die eine der besagten, gegenüberliegenden Seiten Mittel zur magnetischen Befestigung (6) bzw. mechanischen Befestigung (7) aufweist und die andere gegenüberliegende Seite Verbindungsmittel (10) aufweist, die deren Befestigung vorzugsweise beweglich auf dem Gestell (1) erlauben.

6. Aufsteller nach Anspruch 5, **dadurch gekennzeichnet, dass** die Verbindungsmittel (10) des einen oder jeden einstückigen Bauteils (9) männliche oder weibliche, vorzugsweise reversierbare, elastische Steckmittel umfasst, wie beispielsweise mindestens eine Nut, die dazu eingerichtet sind, mit komplementären männlichen oder weiblichen, elastischen Steckmitteln (11), wie beispielsweise mindestens eine integrierte Rippe des Gestells (1), zusammenzuarbeiten.

7. Aufsteller nach einem beliebigen der Ansprüche 1 bis 6, **dadurch gekennzeichnet, dass** die magnetische Befestigungsstelle (3) oder gegebenenfalls die mechanische Befestigungsstelle (3') einen Axialanschlag (12) bzw. (13) aufweist, welcher es erlaubt, die Axialverschiebung der Befestigungs- und Schwenkseite (4) jeder Tasche (2) im Befestigungszustand an dem Gestell (1) zu blockieren
oder zu begrenzen.

8. Aufsteller nach Anspruch 7, **dadurch gekennzeichnet, dass** der Axialanschlag (12) der magnetischen Befestigungsstelle (3') eine Anlage- oder Anschlagseite umfasst, die sich transversal erstreckt, und dadurch, dass der Axialanschlag (13) der mechanischen Befestigungsstelle (3') gegebenenfalls durch den Boden der Nut (7') ausgebildet wird.

9. Aufsteller nach einem beliebigen der Ansprüche 1 bis 8, **dadurch gekennzeichnet, dass** er seitliche Anschläge (14) aufweist, die vorzugsweise auf bewegliche Weise an dem Gestell (1) befestigt sind und sich beidseits seitlich der magnetischen Befestigungsstelle (3) bzw. mechanischen Befestigungsstelle (3') oder zumindest einer der magnetischen Befestigungsstellen (3) bzw. mechanischen Befestigungsstellen (3') derart erstreckt, dass die seitliche Halterung der Taschen (2), die auf dem Gestell (1) in einem offenen Zustand in der Art eines offenen Buches befestigt sind, erlaubt wird.

## Claims

1. Display for documents or information contained in transparent pockets (2) or other analogous elements, comprising at least one assembly composed of a row of pockets (2) and of a support (1) comprising a system (3, 3') for receiving the row of pockets (2) on the support (1), each pocket (2) having a fixing and pivoting side (4) provided with two pivoting elements (5), the receiving system (3, 3') being arranged to receive and retain, in a removable manner, the pivoting element or elements (5) of each pocket (2) on the support (1), thereby allowing the removable fixing and the pivoting, in the manner of the pages of a book, of each pocket (2) on the support (1), in which display, for each assembly, each pocket (2) is provided with two pivoting elements (5) each consisting of a pivot of overall cylindrical or polygonal shape that extends substantially parallel to the corresponding fixing and pivoting side (4) and substantially at the level of and/or beyond one of the ends of the corresponding fixing and pivoting side (4), and the said receiving system is able to allow, in the fixed state, a transverse movement of the fixing and pivoting side (4) of each pocket (2) on the support (1), the display being **characterized in that** the receiving system (3, 3') is formed by a magnetic fixing site (3) able to receive and to retain by magnetic attraction, on its own, one of the two at least partially metallic or magnetic pivots (5) of each pocket (2), and by a mechanical fixing site (3') able to receive and to retain mechanically on its own the other pivot (5) of each pocket (2).

2. Display according to Claim 1, **characterized in that** the magnetic fixing means of the magnetic fixing site (3) consist of a magnetic fixing and lateral movement surface (6), which is metallic or magnetic, able to retain, by magnetic attraction, the or one of the pivoting elements (5) against the said surface while allowing the lateral sliding of the pivoting element (5) in question on the said surface so as to permit, in the fixed state, the transverse movement of the fixing and pivoting side (4) of the pocket (2) in question.

3. Display according to Claim 2, **characterized in that** the magnetic fixing and lateral movement surface (6) of the magnetic fixing site (3) is produced from a magnet (6') or from a juxtaposition of magnets (6') each taking the form of a plate of which one of the large faces forms, at least partially, the said surface (6).

4. Display according to any one of Claims 1 to 3, **characterized in that** the mechanical fixing means of the mechanical fixing site (3') consist of a mechanical fixing slot (7) extending transversely and being able to receive and to retain mechanically, in the latter, one of the pivoting elements (5) of each pocket (2) while allowing the sliding of the said pivoting element (5) in the slot (7) so as to permit, in the fixed state, the transverse movement of the fixing and pivoting side (4) of the pocket (2) in question.

5. Display according to any one of Claims 1 to 4, **characterized in that** the magnetic fixing site (3) or, respectively, mechanical fixing site (3') consists of a monobloc part (9) or, respectively, monobloc part (9'), preferably of plastic, comprising two opposed faces of which one of the said opposed faces comprises the magnetic fixing means (6) or, respectively, mechanical fixing means (7) and the other opposed face comprises connecting means (10) allowing its, preferably removable, fixing on the support (1).

6. Display according to Claim 5, **characterized in that** the connecting means (10) of the or of each monobloc part (9) consist of male or female elastic engagement means, which are preferably reversible, such as, for example, at least one slot, able to cooperate with male or female complementary elastic engagement means (11), such as, for example, at least one rib, secured to the support (1).

7. Display according to any one of Claims 1 to 6, **characterized in that** the magnetic fixing site (3), where appropriate, the mechanical fixing site (3'), comprises an axial stop (12) or, respectively, an axial stop (13), making it possible to block or to limit the axial translation of the fixing and pivoting side (4) of each pocket (2) in the fixed state on the support (1).

8. Display according to Claim 7, **characterized in that** the axial stop (12) of the magnetic fixing site (3') consists of a bearing or stop face extending transversely, and **in that**, where appropriate, the axial stop (13) of the mechanical fixing site (3') is formed by the bottom of the slot (7').

9. Display according to any one of Claims 1 to 8, **characterized in that** it comprises lateral stops (14) fixed, preferably in a removable manner, on the support (1) and extending laterally on either side of the or of at least one of the magnetic fixing site(s) (3) or, respectively mechanical fixing site(s) (3'), thereby allowing the lateral retention of the pockets (2) fixed on the support (1) in an open state in the manner of an open book.
